# EUROPÄISCHE PATENTANMELDUNG

(11) **EP 3 444 101 A1**
(43) Veröffentlichungstag der Anmeldung: **20.02.2019**
(21) Anmeldenummer: 17186127.1
(22) Anmeldetag: 14.08.2017
(51) Int. Cl.: B29C 64/209, B33Y 30/00

(54) **DRUCKKOPF**

(71) Anmelder: Technische Universität München, 80333 München (DE)
(72) Erfinder: FISCHER, Stefan, 82377 Penzberg (DE); PAMMER, Sebastian Tobias, 81679 München (DE); LEONHARDT, Stefan, 80797 München (DE); HAERST, Miriam, 80634 München (DE); GATTINGER, Johannes, 84028 Landshut (DE)
(74) Vertreter: Hoefer & Partner Patentanwälte mbB

(57) **Zusammenfassung**

Die Erfindung betrifft einen Druckkopf (1) zur additiven Fertigung von Objekten (2) umfassend: eine Heizvorrichtung (3) zum Aufschmelzen eines strangförmigen, hohlen Ausgangsmaterials (4), eine Führung (5) zum Zuführen des Ausgangsmaterials (4) zu der Heizvorrichtung (3), wobei das aufgeschmolzene Ausgangsmaterial (4) auf eine Plattform (8) aufbringbar ist, um das Objekt (2) zu fertigen, und wobei die Führung (5) ein Einsatzelement (6) und ein das Einsatzelement (6) umgebendes Außenelement (7) aufweist.

## Beschreibung

Die Erfindung betrifft einen Druckkopf zum additiven Fertigen von Objekten. Insbesondere werden Objekte mittels des Druckkopfes schichtweise auf eine Plattform aufgetragen. Somit ist der Druckkopf insbesondere ein Druckkopf eines sogenannten 3D-Druckers.

Zum Aufschmelzen des Ausgangsmaterials wird dieses einer Heizvorrichtung zugeführt. Das Ausgangsmaterial wird auch Filament genannt und ist üblicherweise strangförmig auf einer Rolle aufgewickelt. Von der Rolle wird das Filament abgewickelt und über einen sogenannten Extruder dem Druckkopf zugeführt. Dabei herrscht zwischen Extruder und Druckkopf eine Druckkraft auf das Ausgangsmaterial. Durch diese Druckkraft muss das Ausgangsmaterial eine hohe Stabilität aufweisen. Insbesondere lassen sich mit aus dem Stand der Technik bekannten Druckern Ausgangsmaterialien mit einer minimalen Härte von etwa Shore-A-90 verarbeiten. Sollen weichere Filamente verarbeitet werden, so ist dies nicht möglich, da bei der Förderung des Filaments von dem Extruder zu dem Druckkopf ein Abknicken des Filaments erfolgt. Dadurch sind ein Transport zu der Heizvorrichtung und ein Ausgeben des aufgeschmolzenen Filaments auf die Plattform nicht möglich.

Es ist Aufgabe der vorliegenden Erfindung, einen Druckkopf bereitzustellen, der bei einfacher und kostengünstiger Herstellung und Montage ein zuverlässiges Herstellen von Objekten ermöglicht, wobei auch weichere Ausgangsmaterialien als im Stand der Technik verwendet werden können.

Die Aufgabe wird gelöst durch die Merkmale des unabhängigen Anspruchs. Die Unteransprüche haben bevorzugte Weiterbildungen der Erfindung zum Inhalt.

Die Aufgabe wird somit gelöst durch einen Druckkopf zum additiven Fertigen von Objekten, wobei vorgesehen ist, dass das Fertigen mittels eines strangförmigen, hohlen Ausgangsmaterials erfolgt. Der Druckkopf umfasst eine Heizvorrichtung zum Aufschmelzen des besagten Ausgangsmaterials sowie eine Führung zum Zuführen des Ausgangsmaterials zu der Heizvorrichtung. Von der Heizvorrichtung ist das aufgeschmolzene Ausgangsmaterial auf eine Plattform aufbringbar, um somit das Objekt schichtweise zu fertigen. Dies bedeutet, dass der Druckkopf insbesondere relativ zu der Plattform beweglich ist. Durch eine Bewegung in Raumrichtungen parallel zu der Oberfläche der Plattform ist eine Schicht des Objekts fertigbar. Anschließend erfolgt eine Relativbewegung zwischen Plattform und Druckkopf in einer Richtung senkrecht zu einer Oberfläche der Plattform. Somit kann auf die zuvor gefertigte Schicht eine weitere Schicht aufgetragen werden. Dieses Vorgehen wird solange wiederholt bis sämtliche Schichten des Objekts gefertigt sind, wodurch das Objekt schichtweise gefertigt ist. Erfindungsgemäß ist vorgesehen, dass die Führung ein Einsatzelement und ein das Einsatzelement umgebendes Außenelement aufweist. Das Außenelement ist insbesondere ein geschlossenes Profil. Besonders vorteilhaft weist somit ein Innenraum der Führung, das bedeutet derjenige Raum in dem das Ausgangsmaterial von der Führung geführt ist, einen ringförmigen Querschnitt auf. Das hohle Ausgangsmaterial kann somit durch besagten ringförmigen Querschnitt der Führung geführt werden. Unter ringförmig ist im Rahmen dieser Erfindung zu verstehen, dass der Innenraum einen geschlossenen Querschnitt aufweist, wobei eine Form des Querschnitts irrelevant ist. Somit kann der Querschnitt eine runde und/oder eckige und/oder ovale Außenbegrenzung sowie eine runde und/oder eckige und/oder ovale Innenbegrenzung aufweisen. Die Außenbegrenzung wird durch das Außenelement, die Innenbegrenzung durch das Einsatzelement realisiert. Da eine Führung des Ausgangsmaterials sowohl von außen als auch von innen erfolgen kann, ist ein Verarbeiten weicherer Materialien, insbesondere bis hin zu einer Härte von Shore-A-30, als im Stand der Technik ermöglicht. Ein Abknicken und/oder Ausbrechen ist insbesondere durch das Zusammenspiel von Außenelement und Einsatzelement verhindert. Besonders vorteilhaft weisen das Einsatzelement und/oder das Außenelement insbesondere an solchen Flächen, die mit dem Ausgangsmaterial in Kontakt gelangen, eine reibungsoptimierte Oberflächenbehandlung auf. Somit ist eine geringe Reibung zwischen der Führung und dem Ausgangsmaterial vorhanden. Dies führt zu einer verbesserten Führung insbesondere von Ausgangsmaterialien mit geringer Härte. Vorteilhafterweise ist das Einsatzelement mittig in dem umgebenden Außenelement angeordnet. Besonders vorteilhaft ist die Führung somit symmetrisch um eine Mittelachse der Führung aufgebaut. Die Mittelachse der Führung entspricht insbesondere auch einer Mittelachse des strangförmigen Ausgangsmaterials, wenn dieses durch die Führung geführt ist. Da durch die Kombination von Außenelement und Einsatzelement ein Ausbrechen oder Abknicken des Ausgangsmaterials verhindert ist, erfolgt ein zuverlässiges Zuführen des Ausgangsmaterials zu der Heizvorrichtung auch bei weicheren Ausgangsmaterialien, als dies bisher im Stand der Technik möglich war.

Bevorzugt weist der Druckkopf eine Fördervorrichtung auf. Die Fördervorrichtung dient zum Zuführen des Ausgangsmaterials zu der Heizvorrichtung. Dabei ist vorgesehen, dass durch die Fördervorrichtung im Bereich der Führung eine Druckkraft auf das Ausgangsmaterial wirkt. Insbesondere ist somit das Ausgangsmaterial von der Fördervorrichtung auf die Führung übertragbar. Somit wird von der Fördervorrichtung eine Druckkraft ausgeübt, die von der Fördervorrichtung in Richtung der Führung und in Richtung der Heizvorrichtung wirkt. Damit besagte Druckkraft nicht zum Ausbrechen oder Abknicken des Ausgangsmaterials führt, ist die beschriebene Führung mit dem Einsatzelement und dem Außenelement vorhanden.

Besonders vorteilhaft ist die Fördervorrichtung unmittelbar an der Führung angeordnet. Somit wird das Ausgangsmaterial von der Fördervorrichtung unmittelbar an die Führung übergeben. Somit ist verhindert, dass aufgrund der von der Fördervorrichtung aufgebrachten Druckkraft ein Ausbrechen oder Abknicken des Ausgangsmaterials zwischen Fördervorrichtung und Führung erfolgt. Dies bedeutet, dass ein Abstand zwischen Fördervorrichtung und Führung minimiert ist.

Weiterhin ist besonders vorteilhaft vorgesehen, dass die Fördervorrichtung zumindest ein Reibrad aufweist. Insbesondere weist die Fördervorrichtung zwei Reibräder auf. Durch das zumindest eine Reibrad ist die Druckkraft auf das Ausgangsmaterial im Bereich der Führung aufbringbar. Ist die Fördervorrichtung unmittelbar an der Führung angebracht, so ist insbesondere vorgesehen, dass eine Außenkontur der Führung an die Kontur des zumindest einen Reibrads angeordnet ist. Dies bedeutet, dass das Ausgangsmaterial nach Verlassen des Kontakts mit dem Reibrad unmittelbar in Kontakt mit der Führung gelangt. Somit ist verhindert, dass das Ausgangsmaterial zwischen Reibrad und Führung ausbrechen oder abknicken kann. Durch die Führung umfassend das Einsatzelement und das Außenelement ist weiterhin verhindert, dass ein Ausbrechen, Abknicken oder lokales Verdicken des Ausgangsmaterials innerhalb der Führung erfolgt. Dadurch ist das Ausgangsmaterial zuverlässig zu der Heizvorrichtung führbar, um von dieser aufgeschmolzen zu werden.

Das Außenelement der Führung ist bevorzugt hohlzylinderförmig ausgebildet. Das Einsatzelement ist bevorzugt zylinderförmig ausgebildet. Dabei ist vorgesehen, dass eine Mittelachse der Hohlzylinderform des Außenelements und eine Mittelachse der Zylinderform des Einsatzelements zusammenfallen. Besonders vorteilhaft fällt mit dieser Mittelachse auch eine Mittelachse oder Symmetrieachse des strangförmigen hohlen Ausgangsmaterials zusammen, wenn das Ausgangsmaterial durch die Führung transportiert wird. Die Hohlzylinderform und/oder die Zylinderform weisen insbesondere runde Querschnitte auf. Somit ist der ringförmige Querschnitt der Führung durch einen Außenkreis und einen Innenkreis gebildet. Auf diese Weise ist das Fertigen des Ausgangsmaterials vereinfacht, da dieses ebenfalls eine Hohlzylinderform aufweisen muss, die im Querschnitt dem ringförmigen Querschnitt der Führung entspricht.

In einer bevorzugten Ausführungsform ist die Heizvorrichtung in zumindest einem Teil der Führung integriert. Alternativ oder zusätzlich ist vorgesehen, dass die Heizvorrichtung ein separates Element ist, und zumindest einen Teil der Führung überlappt. Somit ist in der Führung ein Bereich vorhanden, in dem das Ausgangsmaterial aufgeschmolzen ist. Die Führung weist weiterhin eine Ausgabeöffnung auf, über die das aufgeschmolzene Ausgangsmaterial ausgegeben werden kann. Insbesondere ist eine zusätzliche Düse vorhanden, wobei über die zusätzliche Düse das aufgeschmolzene Ausgangsmaterial auf die Plattform aufbringbar ist, um eine Schicht des Objekts zu fertigen.

Besonders vorteilhaft ist vorgesehen, dass das Einsatzelement an dem Außenelement nur an solchen Bereichen der Führung befestigt ist, an denen das Ausgangsmaterial durch die Heizvorrichtung aufgeschmolzen ist. Da sich das Einsatzelement innerhalb des Außenelements befindet, ist ein Befestigen des Einsatzelements an dem Außenelement notwendig. Um zu verhindern, dass besagte Befestigung einen Transport des Ausgangsmaterials innerhalb der Führung blockiert, ist somit vorgesehen, dass eine solche Befestigung nur in Bereichen der Führung vorgesehen ist, die aufgeschmolzenes Ausgangsmaterial transportieren. Somit kann das Ausgangsmaterial im aufgeschmolzenen Zustand um besagte Befestigung herum geführt werden. Gleichzeitig ist sichergestellt, dass das Einsatzelement entlang sämtlicher Bereiche der Führung vorhanden ist, an denen das Ausgangsmaterial nicht aufgeschmolzen ist und somit der Führung sowohl durch das Außenelement als auch durch das Einsatzelement bedarf.

Das Ausgangsmaterial liegt an bzw. in der Führung sowohl an dem Außenelement als auch an dem Einsatzelement an. Dies bedeutet, dass eine Führung des Ausgangsmaterials sowohl über eine Außenfläche des Ausgangsmaterials als auch über eine Innenfläche des Ausgangsmaterials erfolgt. Auf diese Weise ist sichergestellt, dass das Ausgangsmaterial zuverlässig durch die Führung geführt wird. Ein Abknicken und/oder Ausbrechen und/oder ein lokales Aufdicken des Ausgangsmaterials ist somit wirksam verhindert, wodurch das Ausgangsmaterial sicher und zuverlässig zu der Heizvorrichtung transportiert werden kann, um dort aufgeschmolzen zu werden.

Das Einsatzelement ist vorteilhafterweise ein Hohlkörper. Der Hohlkörper umfasst eine Vielzahl von Öffnungen in seiner Mantelfläche. Auf diese Weise kann der Innenraum des Hohlkörpers des Einsatzelements mit einem Innendruck beaufschlagt werden. So kann Luft und/oder Gas aus den Öffnungen austreten und somit eine Luftschicht/Gasschicht auf der Oberfläche des Einsatzelements und damit zwischen Einsatzelement und Ausgangsmaterial bilden. Durch besagte Luftschicht und/oder Gasschicht ist somit eine Reibung des Ausgangsmaterials auf dem Einsatzelement verhindert. Somit kann das Ausgangsmaterial reibungsarm durch die Führung geführt werden.

Die Öffnungen weisen bevorzugt einen Durchmesser kleiner als 1000 µm auf. Besonders vorteilhaft ist der Durchmesser der besagten Öffnungen kleiner als 100 µm. Auf diese Weise ist sichergestellt, dass eine zuverlässige Führungsfunktion von dem Einsatzelement wahrgenommen werden kann, die nicht durch die Öffnungen beeinträchtigt wird. Gleichzeitig lässt sich Gas/Luft zuverlässig durch die Öffnungen ausstoßen.

Alternativ oder zusätzlich ist die Oberfläche des Einsatzelements und/oder des Außenelements so beschaffen, dass die Reibung zwischen Ausgangsmaterial und Einsatzelement und/oder Außenelement reduziert wird. Dies wird vorzugsweise über eine PTFE-Beschichtung oder Eloxieren realisiert.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Ansicht eines Druckkopfes gemäß einem Ausführungsbeispiel der Erfindung,
- Fig. 2: eine schematische Schnittansicht des Druckkopfes gemäß dem Ausführungsbeispiel aus Fig. 1, und
- Fig. 3: eine schematische Detailansicht der Führung des Druckkopfes gemäß einem weiteren Ausführungsbeispiel der Erfindung.

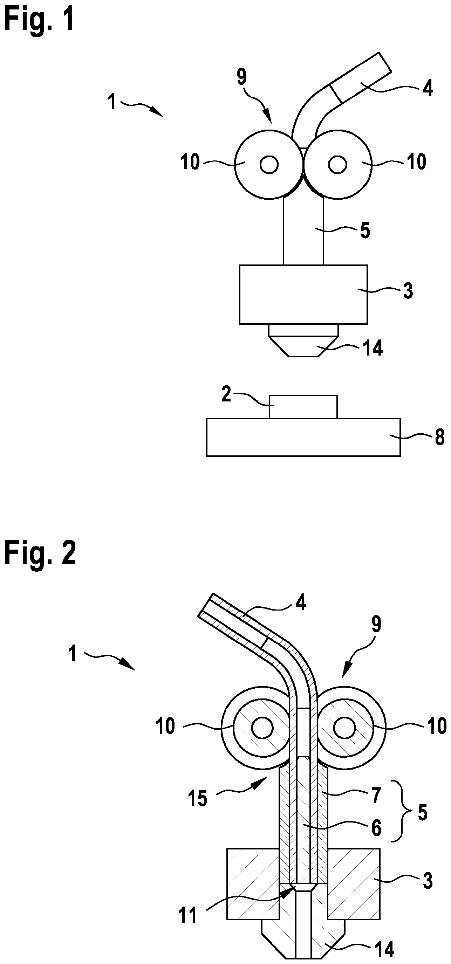

Figur 1 zeigt schematisch einen Druckkopf 1 zum additiven Fertigen von Objekten 2 auf einer Plattform 8. In Figur 2 ist derselbe Druckkopf 1 in einer Schnittansicht gezeigt.

Dem Druckkopf 1 ist ein Ausgangsmaterial 4 zuführbar, wobei das Ausgangsmaterial 4 von dem Druckkopf 1 aufgeschmolzen und schichtweise auf die Plattform 8 aufgebracht wird. Dazu sind Druckkopf 1 und Plattform 8 relativ zueinander bewegbar. Durch eine Bewegung entlang von Raumrichtungen parallel zu einer Oberfläche der Plattform 8, auf der das Objekt 2 gefertigt werden soll, lässt sich eine Schicht des Objekts 2 fertigen. Ist eine Schicht vollständig gefertigt, so wird anschließend eine Relativbewegung zwischen Druckkopf 1 und Plattform 8 senkrecht zu der Oberfläche der Plattform 8, auf der das Objekt 2 gefertigt werden soll, durchgeführt. Dies bedeutet, dass auf der bereits gefertigten Schicht eine weitere Schicht des Objekts 2 durch den Druckkopf 1 aufgebracht werden kann. Diese Vorgänge werden wiederholt bis sämtliche Schichten des Objekts 2 gefertigt sind. Besonders vorteilhaft werden zum Fertigen eines Objekts 2 mehrere Druckköpfe 1 verwendet, wobei vorzugsweise einer der Druckköpfe 1 ein Hilfsmaterial aufweist, das nach dem Fertigen des Objekts 2 wieder entfernt wird. Auf diese Weise lassen sich Stützstrukturen während des Fertigens des Objekts 2 auf die Plattform 8 aufbringen, um auch komplexe Objekte 2 fertigen zu können.

Das Aufbringen einzelner Schichten des Objekts 2 auf die Plattform 8 erfolgt durch das Aufschmelzen des Ausgangsmaterials 4. Das Ausgangsmaterial 4 wird an einer Heizvorrichtung 3 aufgeschmolzen und über eine Düse 14 ausgegeben. Dabei ist vorgesehen, dass eine Fördervorrichtung 9 umfassend zwei Reibräder 10, das Ausgangsmaterial 4 durch eine Führung 5 der Heizvorrichtung 3 zuführt. Somit wirkt eine Druckkraft auf das sich in der Führung 5 befindliche Ausgangsmaterial 4. Besagte Druckkraft dient einerseits dazu, das Ausgangsmaterial 4 der Heizvorrichtung 3 zuzuführen, andererseits dazu, das aufgeschmolzene Ausgangsmaterial 4 über die Düse 14 auszustoßen. Somit kann durch entsprechende Steuerung der Reibräder 10 die Menge an Ausgangsmaterial 4 gesteuert werden, die über die Düse 14 den Druckkopf 1 verlassen soll.

Der Druckkopf 1 gemäß dem Ausführungsbeispiel der Erfindung ist vorteilhafterweise zum Verarbeiten von flexiblen Ausgangsmaterialien 4 bis zu einer Härte von mindestens Shore-A-30 ausgebildet. Bei solchen Ausgangsmaterialien 4 besteht stets die Gefahr, dass diese bei Aufbringen einer Druckkraft abknicken oder ausbrechen. Um dies zu verhindern, ist die Führung 5 unmittelbar an den Reibrädern 10 der Fördervorrichtung 9 angeordnet. Dies bedeutet, dass das Ausgangsmaterial 4 unmittelbar von den Reibrädern 10 an die Führung 5 übergeben wird. Eine Eingangsöffnung 15 der Führung 5 ist daher komplementär zu der Form der Reibräder 10 ausgebildet.

Weiterhin umfasst die Führung 5 ein Außenelement 7 und ein Einsatzelement 6. Dabei ist vorgesehen, dass das Außenelement 7 das Einsatzelement 6 umgibt, wodurch ein ringförmiger Querschnitt der Führung 5 gebildet ist. Insbesondere ist vorgesehen, dass das Außenelement 7 hohlzylinderförmig ausgebildet ist, während das Eingangselement 6 zylinderförmig ausgebildet ist. Dabei fallen eine Mittelachse des hohlzylinderförmigen Außenelements 7 und eine Mittelachse des zylinderförmigen Einsatzelements 6 vorteilhafterweise zusammen. Ebenfalls mit diesen Mittelachsen fällt eine Mittelachse und/oder Symmetrieachse des hohlen strangförmigen Ausgangsmaterials 4 zusammen, wenn dieses entlang der Führung 5 geführt ist. Somit ist vorgesehen, dass das hohle Ausgangsmaterial 4 durch den ringförmigen Querschnitt der Führung 5 geführt ist. Dabei liegt das Ausgangsmaterial 4 vorteilhafterweise sowohl an dem Außenelement 7 als auch an dem Einsatzelement 6 an. Auf diese Weise ist eine zuverlässige Führung des Ausgangsmaterials 4 erreichbar.

Durch die beschriebenen Maßnahmen wird erreicht, dass ein Ausbrechen und/oder Abknicken des Ausgangsmaterials wirksam verhindert ist. Somit lassen sich auch weiche Ausgangsmaterialien mit der zuvor beschriebenen minimalen Härte von Shore-A-30 verarbeiten, während im Stand der Technik lediglich Materialien mit einer minimalen Härte von Shore-A-90 verwendbar sind. Somit ist der Bereich der verwendbaren Ausgangsmaterialien 4 bei dem erfindungsgemäßen Druckkopf 1 gemäß dem gezeigten Ausführungsbeispiel erhöht.

Die Heizvorrichtung 3 ist in dem gezeigten Ausführungsbeispiel als separates Element ausgebildet. Die Heizvorrichtung 3 kann ebenso in die Führung 5 integriert sein. In jedem Fall ist vorgesehen, dass die Heizvorrichtung 3 mit zumindest einem Bereich der Führung 5 überlappt. Somit ist das Ausgangsmaterial 4 innerhalb der Führung 5 aufschmelzbar. Dies bedeutet, dass über die Eingangsöffnung 15 das feste Ausgangsmaterial 4 der Führung 5 zuführbar ist, während über eine Ausgabeöffnung 11 ein aufgeschmolzenes Ausgangsmaterial 4 aus der Führung 5 ausgebbar ist. Insbesondere wird das Ausgangsmaterial 4 nach dem Aufschmelzen und dem Ausgeben aus der Ausgabeöffnung 11 an die Düse 14 übergeben, wobei das Ausgangsmaterial 4 über die Düse 14 auf die Plattform 8 aufgebracht wird.

Das Einsatzelement 6 ist an dem Außenelement 7 befestigt. Besagte Befestigung liegt in einem Bereich der Führung 5, in dem das Ausgangsmaterial 4 bereits aufgeschmolzen ist. Somit ist verhindert, dass besagte Befestigung ein Fördern des Ausgangsmaterials 4 durch die Führung 5 blockiert. Vielmehr kann das aufgeschmolzene Ausgangsmaterial 4 um besagte Befestigung herumgeführt werden.

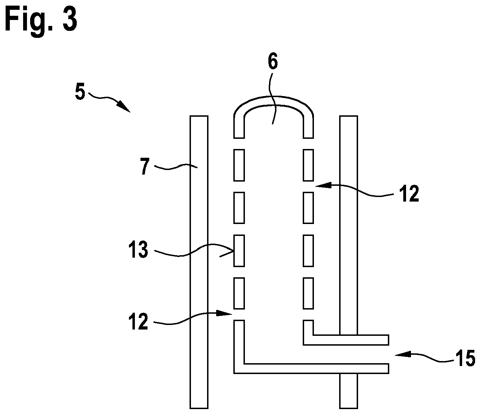

Fig. 3 zeigt schematisch eine Detailansicht der Führung 5 des Druckkopfes 1 gemäß einem weiteren Ausführungsbeispiel der Erfindung. Dabei ist ersichtlich, dass das Einsatzelement 6 einen Hohlkörper ausbildet, der auf seiner Mantelfläche 13 eine Vielzahl von Öffnungen 12 aufweist. Über eine Fluidzufuhr 15 ist Luft und/oder Gas in den Innenraum des Einsatzelements 6 einbringbar. Wird ein Überdruck in den Innenraum des Einsatzelements 6 eingebracht, so erfolgt ein Austreten des Gases und/oder der Luft aus den Öffnungen 12. Dadurch ist ein Luftfilm und/oder Gasfilm zwischen dem Ausgangsmaterial 4 und dem Einsatzelement 6 realisierbar. Dies führt zu einer verringerten Reibung des Ausgangsmaterials 4 an dem Einsatzelement 6 und somit zu einer verringerten Reibung des Ausgangsmaterials 4 an der Führung 5. Dadurch ist eine Druckkraft, die auf das Ausgangsmaterial 4 entlang der Führung 5 wirken muss, verringert. Dies vereinfacht das Auslegen der Fördervorrichtung 9, die über die Reibräder 10 besagte Druckkraft aufbringen muss.

Durch den Druckkopf 1 wie zuvor beschrieben lässt sich somit eine große Vielzahl von Ausgangsmaterialien 4 verwenden. Dabei ist jederzeit zuverlässig verhindert, dass es zu einem Ausbrechen und/oder Abknicken des Ausgangsmaterials 4 kommt. Vielmehr wird durch die Führung 5 und das Zusammenspiel von Fördervorrichtung 9 und Führung 5 ein solches Ausbrechen bzw. Abknicken wirksam verhindert, so dass eine Druckkraft auf das Ausgangsmaterial 4 aufbringbar ist, mit der das Ausgangsmaterial 4 sicher und zuverlässig zu der Heizvorrichtung 3 geführt werden kann und nach dem Aufschmelzen durch die Heizvorrichtung 3 über die Düse 14 auf die Plattform 8 ausgegeben werden kann. Somit lassen sich mittels des Druckkopfes 1 Objekte 2 aus weicheren Materialien fertigen, als dies bisher im Stand der Technik möglich ist.

### Bezugszeichenliste

- 1: Druckkopf
- 2: Objekt
- 3: Heizvorrichtung
- 4: Ausgangsmaterial
- 5: Führung
- 6: Einsatzelement
- 7: Außenelement
- 8: Plattform
- 9: Fördervorrichtung
- 10: Reibrad
- 11: Ausgabeöffnung
- 12: Öffnung
- 13: Mantelfläche
- 14: Düse
- 15: Eingangsöffnung

## Patentansprüche

1. Druckkopf (1) zur additiven Fertigung von Objekten (2) umfassend:
- eine Heizvorrichtung (3) zum Aufschmelzen eines strangförmigen, hohlen Ausgangsmaterials (4),
- eine Führung (5) zum Zuführen des Ausgangsmaterials (4) zu der Heizvorrichtung (3),
- wobei das aufgeschmolzene Ausgangsmaterial (4) auf eine Plattform (8) aufbringbar ist, um das Objekt (2) zu fertigen, und
- wobei die Führung (5) ein Einsatzelement (6) und ein das Einsatzelement (6) umgebendes Außenelement (7) aufweist.

2. Druckkopf (1) nach Anspruch 1, **gekennzeichnet durch** eine Fördervorrichtung (9) zum Zuführen des Ausgangsmaterials (4) zu der Heizvorrichtung (3), wobei durch die Fördervorrichtung (9) im Bereich der Führung (5) eine Druckkraft auf das Ausgangsmaterial (4) wirkt.

3. Druckkopf (1) nach Anspruch 2, **dadurch gekennzeichnet, dass** die Fördervorrichtung (9) unmittelbar an der Führung (5) angeordnet ist.

4. Druckkopf (1) nach Anspruch 2 oder 3, **dadurch gekennzeichnet, dass** die Fördervorrichtung (9) zumindest ein Reibrad (10) aufweist, um die Druckkraft auf das Ausgangsmaterial (4) im Bereich der Führung aufzubringen.

5. Druckkopf (1) nach einem der vorhergehenden Ansprüche, **dadurch gekennzeichnet, dass** das Außenelement (7) hohlzylinderförmig und/oder das Einsatzelement (6) zylinderförmig ausgebildet ist.

6. Druckkopf (1) nach einem der vorhergehenden Ansprüche, **dadurch gekennzeichnet, dass** die Heizvorrichtung in zumindest einen Teil der Führung (6) integriert ist und/oder zumindest einen Teil der Führung (5) überlappt, wobei die Führung (5) eine Ausgabeöffnung (11) aufweist, durch die, insbesondere über eine zusätzliche Düse (14), das aufgeschmolzene Ausgangsmaterial (4) auf die Plattform (8) aufbringbar ist.

7. Druckkopf (1) nach Anspruch 6, **dadurch gekennzeichnet, dass** das Einsatzelement (6) an dem Außenelement (7) nur an solchen Bereichen der Führung (5) befestigt ist, an denen das Ausgangsmaterial (4) durch die Heizvorrichtung (3) aufgeschmolzen ist.

8. Druckkopf (1) nach einem der vorhergehenden Ansprüche, **dadurch gekennzeichnet, dass** das Ausgangsmaterial (4) an bzw. in der Führung (5) sowohl an dem Außenelement (7) als auch an dem Einsatzelement (6) anliegt.

9. Druckkopf (1) nach einem der vorhergehenden Ansprüche, **dadurch gekennzeichnet, dass** das Einsatzelement (6) ein Hohlkörper ist, der eine Vielzahl von Öffnungen (12) in seiner Mantelfläche (13) aufweist.

10. Druckkopf (1) nach Anspruch 9, **dadurch gekennzeichnet, dass** die Öffnungen (12) einen Durchmesser kleiner als 1000 µm, insbesondere kleiner als 100 µm, aufweisen.
